# EUROPÄISCHE PATENTANMELDUNG

(11) **EP 2 722 220 A1**
(43) Veröffentlichungstag der Anmeldung: **23.04.2014**
(21) Anmeldenummer: 14075005.0
(22) Anmeldetag: 01.02.2010
(51) Int. Cl.: B60M 1/30, B60M 1/20

(54) **Oberleitungsanlage**

(30) Priorität: 29.05.2009 DE 102009023197; 16.07.2009 DE 102009033447
(62) Teilanmeldung aus: 10704780.5
(71) Anmelder: Siemens Aktiengesellschaft, 80333 München (DE)
(72) Erfinder: Biege, Ulrich, 90439 Nürnberg (DE); Hahn, Gunter, 91353 Hausen (DE); Krumpolt, Jens, 97688 Bad Kissingen (DE); Neumann, Tim-Robert, 90419 Nürnberg (DE)

(57) **Zusammenfassung**

Oberleitungsanlage mit Deckenstromschienen (1, 16), die jeweils in ihrem mittleren Bereich durch einen Festpunkt an einem Bauwerk (14) fixiert sind und sonst über bewegliche Stützpunktarme (11) mit dem Bauwerk (14) verbunden sind,
**dadurch gekennzeichnet,**
dass zumindest im Abschnitt einer Schienenüberhöhung die beweglichen Stützpunktarme (11) über Drehbolzen (12) und Verstelleinrichtungen (13) mit dem Bauwerk (14) verbunden sind und dass jeweils die Verstelleinrichtung (13) zwischen dem Bauwerk (14) und dem Drehbolzen (12) angeordnet ist, damit die Drehachse des Drehbolzens (12) senkrecht zur Schienenkopfberührenden auszurichten ist.

## Beschreibung

Die Erfindung betrifft eine Oberleitungsanlage mit Deckenstromschienen, die jeweils in ihrem mittleren Bereich durch einen Festpunkt an einem Bauwerk fixiert sind und sonst über bewegliche Stützpunktarme mit dem Bauwerk verbunden sind.

Die Bewegung der Stützpunktarme kann eine Gleitbewegung sein.

Das Bauwerk kann ein Tragwerk sein.

Eine solche Deckenstromschiene ist aus dem Aufsatz von Urs Beat Wili "Stromschienenoberleitung für Geschwindigkeiten bis 160 km/h" in Elektrische Bahnen eb 87 (1989) 10, Seiten 310 bis 315, bekannt. Das Bauwerk ist zum Beispiel eine Tunneldecke.

Beim Befahren eines Tunnels oder eines anderen Bauwerkes, an dem eine Deckenstromschiene angebracht ist, kommt es häufig zu Störungen bei der Stromübertragung von der Oberleitungsanlage zum Pantographen des Fahrzeuges und damit zum Antriebsmotor des Fahrzeuges. Diese Störungen können auch zur Funkenbildung und zu Lichtbögen führen, die beispielsweise den Funkverkehr stören können.

Aus der Druckschrift DE 20 2004 009 416 U1 ist eine Oberleitungsanlage gemäß dem Oberbegriff des Anspruch 1 bekannt.

Der Erfindung liegt die Aufgabe zugrunde, eine Oberleitungsanlage anzugeben, bei der im Bereich von Deckenstromschienen eine gegenüber bekannten Anlagen verbesserte Stromübertragung zum Pantographen gegeben ist. Außerdem sollen Funkenbildung und Lichtbögen verringert werden, so dass es zu weniger Störungen kommt.

Die Aufgabe wird dadurch gelöst, dass zumindest im Abschnitt einer Schienenüberhöhung die beweglichen Stützpunktarme über Drehbolzen und Verstelleinrichtungen mit dem Bauwerk verbunden sind und dass jeweils die Verstelleinrichtung zwischen dem Bauwerk und dem Drehbolzen angeordnet ist, damit die Drehachse des Drehbolzens senkrecht zur Schienenkopfberührenden auszurichten ist.

Die Verstelleinrichtung kann zum Beispiel vertikal wirken.

Bei einer Überhöhung der Schiene, was beispielsweise bei einer Kurve gegeben ist, ist es erstmals möglich, durch die Verstelleinrichtung die Achse des Drehbolzens zu neigen. Damit wird der Vorteil erzielt, dass auch im Bereich einer Schienenüberhöhung Wärmedehnungen der Stromschiene durch eine einfache Drehung des Drehbolzens kompensiert werden, ohne dass es zu einer Änderung des Abstandes der Stromschiene von der Schienenkopfberührenden kommt. Es wird verhindert, dass die Stromschiene gegenüber der Schienenkopfberührenden wellig verläuft. Vorteilhaft ist eine verbesserte Stromübertragung ohne Funkenbildung und Lichtbögen von der Stromschiene zum Pantographen gewährleistet.

Die Stützpunktarme weisen beispielsweise Verbundisolatoren auf. Diese sorgen für eine Isolierung gegenüber dem Bauwerk.

Gemäß einer bevorzugten Ausführungsform der erfindungsgemäßen Oberleitungsanlagen weist mindestens eine der Deckenstromschienen an ihrer Oberseite einen Querträger auf, von dem an Anschlusspunkten zwei nach unten gerichtete Spannarme zum Halten eines Fahrdrahtes ausgehen und dass der Querträger beidseitig von den Anschlusspunkten der Spannarme sich konisch verjüngende Anformungen hat, die in korrespondierende Ausnehmungen einer Klemmarmatur einfügbar sind.

Damit wird der Vorteil erzielt, dass aufgrund der besseren Klemmeigenschaften die Stromübertragung verbessert ist und damit auch die Funkenbildung und die Bildung von Lichtbögen weitgehend vermieden wird.

Die konisch sich verjüngenden Anformungen der Querträger und die korrespondierenden Ausnehmungen der Klemmarmaturen ermöglichen eine gute formschlüssige Verbindung mit hoher Haltekraft sowie einen geringen elektrischen Widerstand und damit eine hohe Strombelastbarkeit. Wegen der stabilen Anordnung sind keine zusätzlichen Bauteile mehr erforderlich.

Die Klemmarmatur ist beispielsweise durch Schrauben am Querträger befestigbar. Dadurch ist eine hohe Stabilität erreicht.

Nach einer dritten Ausführungsform ist vorgesehen, dass mindestens eine der Deckenstromschienen an ihrer Oberseite einen Querträger aufweist, der über eine in Längsrichtung der Deckenstromschiene gebogene Feder mit einer Halterung in Verbindung steht, die mit einem beweglichen Stützpunktarm verbunden ist.

Die Feder drückt mit ihren freien Federarmen auf die Oberseite der Deckenstromschiene.

Damit werden Schwingungen der Stromschiene gedämpft, was zu besseren fahrdynamischen Eigenschaften beim Fahren eines Zuges führt. Die Stromübertragung auf den Pantographen und damit zum Fahrzeug wird verbessert. Funkenbildung und Lichtbögen, die den Funkverkehr stören, werden weitgehend verhindert.

Bei einer Stromschiene mit gleitend beweglichen Stützpunkten werden Potenzialunterschiede zwischen der Stromschiene und ihrer Halterung verhindert, so dass vorteilhaft Funken und Lichtbögen vermieden werden, die zu Störungen des Funkverkehrs führen können.

Nach einer vierten Ausführungsform ist vorgesehen, dass im Überlappungsbereich von zwei Deckenstromschienen, wo diese nebeneinander verlaufen, diese beiden Deckenstromschienen über eine Verbindungseinrichtung verbunden sind, die in Richtung der Längsachsen der Deckenstromschienen verschiebbar die beiden Deckenstromschienen auf einem gleichen Höhenniveau über der Schienenkopfberührenden hält. Das gilt auch bei Beschleifung durch einen Pantographen.

Wenn ein Zug mit seinem Pantographen an der Deckenstromschiene entlangfährt, wird durch die Andruckkraft des Pantographen die Deckenstromschiene etwas angehoben. Im Überlappungsbereich von zwei Deckenstromschienen ergibt sich dann der Nachteil, dass die Deckenstromschiene, die vom Pantographen noch nicht erreicht ist, etwas tiefer positioniert ist als die Deckenstromschiene, die momentan mit dem Pantographen in Kontakt ist. Beim Übergang des Pantographen von der einen zur anderen Deckenstromschiene schlägt dann der Pantograph an die Kante der zweiten Deckenstromschiene an und kann dadurch beschädigt werden. Es kommt zur Funkenbildung und zum erhöhten Verschleiß.

Es war bereits vorgeschlagen worden, die zweite Deckenstromschiene grundsätzlich etwas höher anzuordnen als die erste. Dadurch wird aber ein bedeutender Nachteil in Kauf genommen, falls der Zugverkehr auf dem gleichen Gleis in entgegengesetzter Richtung erfolgen muss. Die zu überwindende Stufe für den Pantographen ist dann zusätzlich erhöht.

Mit der Verbindungseinrichtung wird der Vorteil erzielt, dass diejenige Deckenstromschiene, die vom Pantographen noch nicht erreicht ist, rechtzeitig, bevor der Pantograph die bereits erreichte Deckenstromschiene verlässt, soweit angehoben wird, dass die beiden Deckenstromschienen das gleiche Niveau aufweisen. Es wird vorteilhaft ein mechanischer Verschleiß weitgehend vermieden und darüber hinaus kommt es kaum zur unerwünschten Funkenbildung oder zu Lichtbögen, wenn der Pantograph von der einen zu der anderen Deckenstromschiene wechselt. Die Stromübertragung wird verbessert.

Die Verbindungseinrichtung ist beispielsweise mit der einen Deckenstromschiene fest verbunden und nur auf der anderen Deckenstromschiene verschiebbar gehalten. Dadurch werden mechanische Belastungen weiter vermindert. Die Verschiebbarkeit ist notwendig, um Wärmedehnungen der Deckenstromschiene zu ermöglichen.

Beispielsweise ist die Verbindungseinrichtung seitlich verschiebbar. Damit werden geringfügige seitliche Bewegungen, die auf die Stützpunktarme zurückzuführen sind, ausgeglichen.

Nach einer fünften Ausführungsform ist vorgesehen, dass zur Verbindung der Deckenstromschiene mit einem Kettenwerk ein elektrischer Verbinder ausgehend vom Ende der Deckenstromschiene über einen Abschnitt auf der Oberseite des Fahrdrahtes des Kettenwerkes entlang geführt und leitend befestigt ist.

Damit wird der Vorteil erzielt, dass die Steifigkeit der Oberleitungsanlage zwischen Fahrdraht und Deckenstromschiene nicht plötzlich ansteigt. Es ist vielmehr ein gleichmäßigerer Anstieg der Steifigkeit dadurch gegeben, dass der Stromverbinder am Fahrdraht über eine bestimmte Strecke entlang geführt ist, was den Fahrdraht an dieser Strecke steifer macht.

Der elektrische Verbinder verbindet beispielsweise die Oberseite des Fahrdrahtes des Kettenwerkes mit der Innenseite der Deckenstromschiene.

Dadurch, dass die Steifigkeit nicht plötzlich, sondern abgestuft zunimmt, erzielt man eine verbesserte Stromübertragung von der Oberleitungsanlage zum Pantographen und es kommt zu deutlich weniger Funkenbildung und Lichtbögen. Beispielsweise ist der elektrische Verbinder vom Fahrdraht aus weiter bis zum Tragseil geführt und dort leitend befestigt. Dadurch ist eine noch bessere Stromübertragung gegeben.

Nach einer sechsten Ausführungsform ist vorgesehen, dass als Festpunkt der Deckenstromschiene zwei Stützpunktarme unmittelbar nebeneinander mit der Deckenstromschiene verbunden sind und dass diese Stützpunktarme sich entgegengesetzt erstreckend an gegenüberliegenden Wänden des Bauwerks befestigt sind.

Falls statt eines Bauwerkes Tragwerke, zum Beispiel Stützen, vorhanden sind, sind die Stützpunktarme an gegenüberliegenden Tragwerken befestigt.

Es wird der Vorteil erzielt, dass die vertikale Auslenkung der Stromschiene verringert wird.

Mit einem solchen besonders stabilen Festpunkt wird eine verbesserte Stromübertragung ohne Funkenbildung und Lichtbögen zwischen der Deckenstromschiene und dem Pantographen gewährleistet.

Mit der Oberleitungsanlage nach der Erfindung wird insbesondere der Vorteil erzielt, dass es im Bereich von Deckenstromschienen, die beispielsweise in einem Tunnel vorhanden sind, gewährleistet ist, dass stets eine gute Stromübertragung ohne Bildung von Funken- und Lichtbögen von der Stromschiene zum Pantographen des Fahrzeuges gegeben ist.

Ausführungsbeispiele der Oberleitungsanlage nach der Erfindung werden anhand der Zeichnung näher erläutert, in deren
- FIG 1: eine Deckenstromschiene mit sich konisch verjüngenden Anformungen,
- FIG 2: eine Deckenstromschiene mit einem Stützpunktarm, der sie drehbar an einem Bauwerk hält,
- FIG 3: die Anordnung einer elektrisch leitenden gebogenen Feder zwischen einem Querträger der Deckenstromschiene und einer Halterung,
- FIG 4: der Überlappungsbereich von zwei Deckenstromschienen,
- FIG 5: die Verbindung einer Deckenstromschiene mit einem Kettenwerk über einen elektrischen Verbinder,
- FIG 6: ein Festpunkt einer Deckenstromschiene
schematisch veranschaulicht sind.

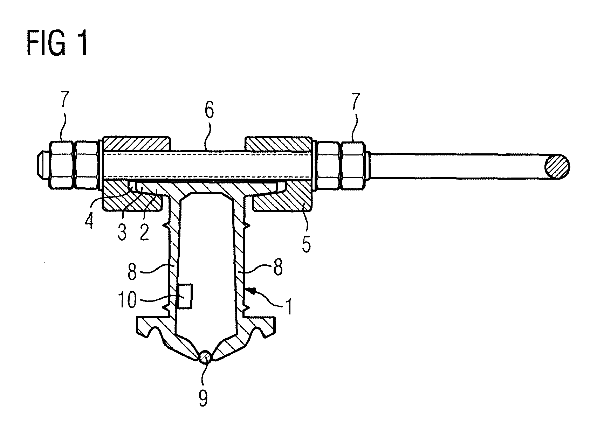

Nach FIG 1 ist die Deckenstromschiene 1 besonders stabil gehalten, so dass eine gute Stromübertragung ohne Funkenbildung möglich ist. Die Deckenstromschiene 1 weist dafür einen Querträger 2 auf, der sich konisch verjüngende Anformungen 3 hat, die in korrespondierende Ausnehmungen 4 von Klemmarmaturen 5 einfügbar sind. Die Klemmarmaturen 5 sind auf einer Halterung 6 durch Schrauben 7 arretiert. Es ist dadurch eine besonders stabile Befestigung der Deckenstromschiene 1 gegeben. Vom Querträger 2 gehen zwei Spannarme 8 aus zum Halten eines Fahrdrahtes 9. An der Innenseite der Deckenstromschiene 1 ist ein elektrischer Verbinder 10 zum Verbinden der Deckenstromschiene 1 mit einem Kettenwerk befestigt.

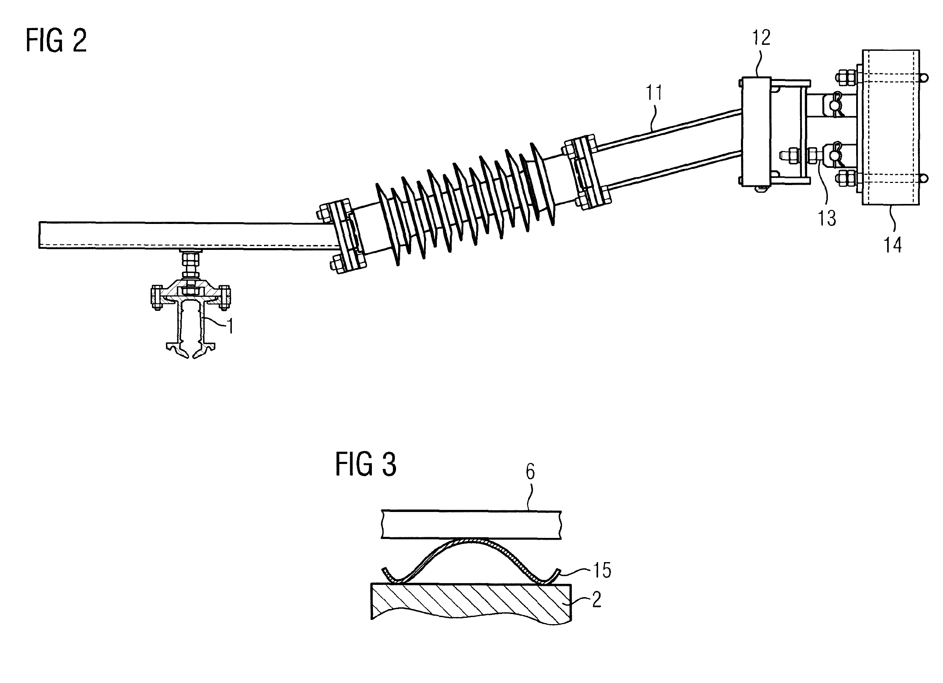

FIG 2 zeigt, wie die Deckenstromschiene 1 über einen Stützpunktarm 11, einen Drehbolzen 12 und eine Verstelleinrichtung 13 mit einem Bauwerk 14, z. B. mit einer Tunnelwand, oder mit einem Tragwerk verbunden ist. Über die Verstelleinrichtung 13 ist sichergestellt, dass der Drehbolzen 12 immer senkrecht zur Schienenkopfberührenden steht, selbst dann, wenn die Schiene überhöht ist.

FIG 3 zeigt eine gebogene elektrisch leitende Feder 15, die zwischen dem Querträger 2 der Deckenstromschiene 1 und der Halterung 6 angeordnet ist, um Schwingungen der Stromschiene 1 zu dämpfen, Potenzialunterschiede zu vermeiden und eine bessere elektrische Verbindung ohne Funken zu ermöglichen.

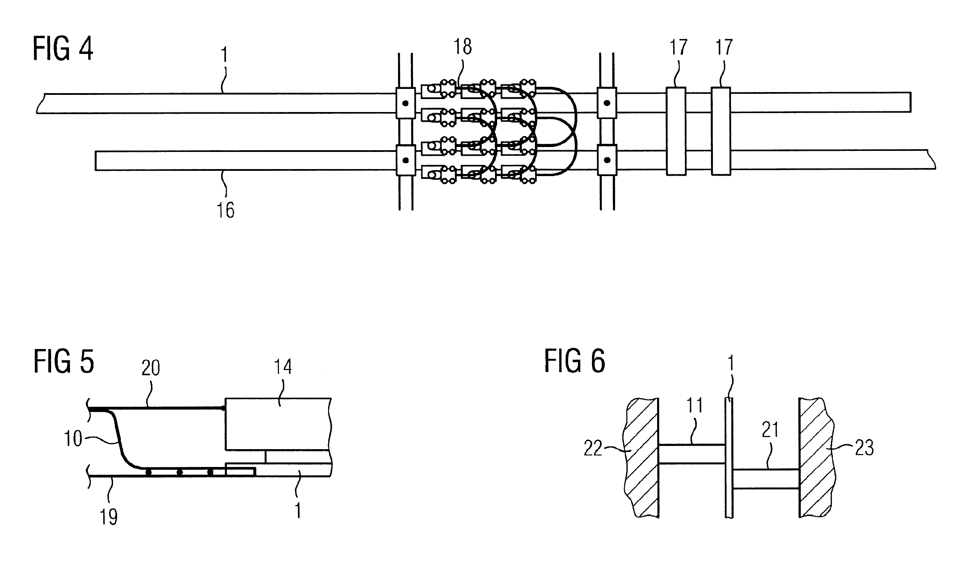

FIG 4 zeigt zwei Deckenstromschienen 1 und 16 in einem Überlappungsbereich. Wegen der Wärmedehnung können die Deckenstromschienen 1 und 16 nicht direkt aneinandergefügt sein. Im Überlappungsbereich gelangt der Pantograph eines Schienenfahrzeuges von der einen Deckenstromschiene 1 auf die andere Deckenstromschiene 16. Die beiden Deckenstromschienen 1 und 16 sind über Verbindungseinrichtungen 17 miteinander verbunden, die in Richtung der Deckenstromschienen 1 und 16 verschiebbar die beiden Deckenstromschienen 1 und 16 auf einem gleichen Niveau über der Schienenkopfberührenden halten. Dadurch wird die zweite Deckenstromschiene 16 schon dann, wenn sich ein Zug mit seinem Pantographen von der ersten Deckenstromschiene 1 her nähert, angehoben, so dass ein problemloser Übergang von der ersten 1 auf die zweite Deckenstromschiene 16 gewährleistet ist. Die beiden Deckenstromschienen 1 und 16 sind auch über elektrische Verbindungen 18 miteinander verbunden.

FIG 5 zeigt am Beginn eines Tunnels die Verbindung einer Deckenstromschiene 1 mit dem Fahrdraht 19 und dem Tragseil 20 eines Kettenwerkes. Während das Tragseil 20 am Bauwerk 14 endet, ist der Fahrdraht 19 mit der Deckenstromschiene 1 verbunden. Um die Steifigkeit vom Fahrdraht 19 zur Deckenstromschiene 1 nicht plötzlich ansteigen zu lassen, ist ein elektrischer Verbinder 10 von der Deckenstromschiene 1 ausgehend am Fahrdraht 19 über eine bestimmte Strecke entlanggeführt und dort befestigt. Anschließend ist der elektrische Verbinder 10 zum Tragseil 20 geführt und dort angeschlossen.

FIG 6 zeigt einen Festpunkt an einer Deckenstromschiene 1, bei dem zwei Stützpunktarme 11 und 21 unmittelbar nebeneinander mit der Deckenstromschiene 1 verbunden sind und sich entgegengesetzt erstreckend an gegenüberliegenden Wänden 22 und 23 des Bauwerkes 14 befestigt sind.

Mit der Oberleitungsanlage nach der Erfindung wird eine gute Stromübertragung zum Pantographen gewährleistet. Es kommt nur zu wenigen Funken und Lichtbögen.

## Patentansprüche

1. Oberleitungsanlage mit Deckenstromschienen (1, 16), die jeweils in ihrem mittleren Bereich durch einen Festpunkt an einem Bauwerk (14) fixiert sind und sonst über bewegliche Stützpunktarme (11) mit dem Bauwerk (14) verbunden sind,
**dadurch gekennzeichnet,**
**dass** zumindest im Abschnitt einer Schienenüberhöhung die beweglichen Stützpunktarme (11) über Drehbolzen (12) und Verstelleinrichtungen (13) mit dem Bauwerk (14) verbunden sind und dass jeweils die Verstelleinrichtung (13) zwischen dem Bauwerk (14) und dem Drehbolzen (12) angeordnet ist, damit die Drehachse des Drehbolzens (12) senkrecht zur Schienenkopfberührenden auszurichten ist.

2. Oberleitungsanlage nach Anspruch 1,
wobei die Stützpunktarme (11) Verbundisolatoren aufweisen.

3. Oberleitungsanlage nach Anspruch 1 oder 2, wobei mindestens eine der Deckenstromschienen (1, 16) an ihrer Oberseite einen Querträger (2) aufweist, von dem an Anschlusspunkten zwei nach unten gerichtete Spannarme (8) zum Halten eines Fahrdrahtes (9) ausgehen, und dass der Querträger (2) beidseitig von den Anschlusspunkten der Spannarme (8) sich konisch verjüngende Anformungen (3) hat, die in korrespondierende Ausnehmungen (4) einer Klemmarmatur (5) einfügbar sind.

4. Oberleitungsanlage nach Anspruch 4,
wobei die Klemmarmatur (5) durch Schrauben (7) am Querträger (2) befestigbar ist.

5. Oberleitungsanlage nach einem der vorhergehenden Ansprüche, wobei mindestens eine der Deckenstromschienen (1, 16) an ihrer Oberseite einen Querträger (2) aufweist, der über eine in Längsrichtung der Deckenstromschiene (1, 16) gebogene Feder (15) mit einer Halterung (6) in Verbindung steht, die mit einem beweglichen Stützpunktarm (11) verbunden ist.

6. Oberleitungsanlage nach einem der vorhergehenden Ansprüche, wobei im Überlappungsbereich von zwei Deckenstromschienen (1 und 16), wo diese nebeneinander verlaufen, diese beiden Deckenstromschienen (1 und 16) über eine Verbindungseinrichtung (17) verbunden sind, die in Richtung der Längsachsen der Deckenstromschienen (1 und 16) verschiebbar die beiden Deckenstromschienen (1 und 16) auf einem gleichen Höhenniveau über der Schienenkopfberührenden hält.

7. Oberleitungsanlage nach Anspruch 6,
wobei die Verbindungseinrichtung (17) mit der einen Deckenstromschiene (1) fest verbunden ist und nur auf der anderen Deckenstromschiene (16) verschiebbar gehalten ist.

8. Oberleitungsanlage nach einem der Ansprüche 6 oder 7,
wobei die Verbindungseinrichtung (17) seitlich verschiebbar ist.

9. Oberleitungsanlage nach einem der vorhergehenden Ansprüche, wobei zur Verbindung der Deckenstromschiene (1) mit einem Kettenwerk ein elektrischer Verbinder (10) ausgehend vom Ende der Deckenstromschiene (1) über einen Abschnitt auf der Oberseite eines Fahrdrahtes (19) des Kettenwerkes entlang geführt und leitend befestigt ist.

10. Oberleitungsanlage nach Anspruch 9,
wobei der elektrische Verbinder (10) vom Fahrdraht (19) aus weiter bis zum Tragseil (20) geführt und dort leitend befestigt ist.

11. Oberleitungsanlage nach einem der vorhergehenden Ansprüche, wobei als Festpunkt der Deckenstromschiene (1) zwei Stützpunktarme (11, 21) unmittelbar nebeneinander mit der Deckenstromschiene (1) verbunden sind und dass diese Stützpunktarme (11, 21) sich entgegengesetzt erstreckend an gegenüberliegenden Wänden (22, 23) des Bauwerks (14) befestigt sind.
